# EUROPEAN PATENT SPECIFICATION

(11) **EP 4 130 464 B1**
(45) Date of publication and mention of the grant of the patent: **31.12.2025**
(21) Application number: 21908531.3
(22) Date of filing: 02.07.2021
(51) Int. Cl.: F03D 13/20, E04H 12/08, F16B 2/18, F16B 33/00, F16J 15/10, F16J 15/06

(54) **SEALING WATERPROOF STRUCTURE OF FRAGMENTED TOWER SECTION AND TOWER**
WASSERDICHTE DICHTUNGSSTRUKTUR FÜR FRAGMENTIERTE TURMSEKTION UND TURM
STRUCTURE ÉTANCHE IMPERMÉABLE À L'EAU DE SECTION DE TOUR FRAGMENTÉE ET TOUR

(30) Priority: 23.12.2020 CN 202011538134
(43) Date of publication of application: 08.02.2023
(73) Proprietor: CRRC Shandong Wind Power Co., Ltd., Shandong 250000 (CN)
(72) Inventor: WANG, Ziyue, Jinan, Shandong 250000 (CN); QI, Yuchao, Jinan, Shandong 250000 (CN); ZHANG, Guowei, Jinan, Shandong 250000 (CN); JIAO, Shoulei, Jinan, Shandong 250000 (CN); SONG, Jian, Jinan, Shandong 250000 (CN)
(74) Representative: Lorenz Seidler Gossel Part. mbB
(86) International application number: PCT/CN2021/104315
(87) International publication number: WO 2022/134526

(56) References cited:
- EP-A1- 3 290 691
- CN-A- 112 709 672
- CN-U- 205 423 080
- CN-U- 206 158 924
- CN-U- 206 158 925
- CN-U- 209 743 097
- CN-U- 209 743 097
- CN-U- 210 714 941
- DE-A1- 102012 216 938
- US-B1- 9 850 674

## Description

### TECHNICAL FIELD

The present disclosure belongs to the field of wind power generation, in particular, relates to a sealing and waterproof structure of split tower section and a tower.

### BACKGROUND

Information of the related art part is merely disclosed to increase the understanding of the overall background of the present invention but is not necessarily regarded as acknowledging or suggesting, in any form, that the information constitutes the prior art known to a person of ordinary skill in the art.

In the current wind power market, with the adjustment of policies for complete machines and the improvement of power rationing, the wind power curtailment rate has dropped sharply, and all regions have good grid connection conditions. To improve the generating capacity of a wind turbine, the capacity of the wind turbine is increasing, the development of wind farms is expanding to low wind speed areas and the urgency of using wind energy in high altitudes, the high tower is imperative. However, considering the bearing capacity and safety of the wind turbine tower, the diameter of the tower must be increased accordingly, and the transportation of the large-diameter tower becomes the bottleneck restricting the development of the wind turbine, so the large-diameter split tower emerges as the times require.

The sealing and waterproof requirements of the connection parts of the large-diameter split tower are very important for the later operation of the unit. The unreasonable structure of the split-connecting piece leads to inaccurate positioning and difficult connection during assembling the pieces, thus generating gaps and causing water inflow.

Document DE 10 2012 216938 A1 discloses a flange for a tower of a wind turbine. The flange should enable an easy assembly of the wind turbine.

Document EP 3 290 691 A1 discloses a tower structure with a connecting channel portion, which is inserted into the installation groove of the flange part to connect multiple tower modules to each other.

### SUMMARY

In view of the deficiencies of the prior art, the first object of the present disclosure is to provide a sealing and waterproof structure of split tower section to improve that rapid position and installation requirements during the assembly of the split tower, ensure that the circumferential flange and the longitudinal flange meet the tolerance requirements after the assembly of the split tower, reduce the dislocation of the cylinder and improve the sealing waterproof performance of the split tower.

The second object of the present disclosure is to provide a tower, wherein water entering the interior of the split tower section from the splicing seam can be drained through the water collecting system inside the tower, and meanwhile, in cooperation with the sealing system on the split tower section, rain, snow, sand, winged insects and the like can be effectively prevented from entering the interior of the tower in the later period, to ensure the safety of the equipment inside the cylinder.

The first object of the present disclosure provides a sealing and waterproof structure of a split tower section, the structure comprising a sealing strip and an installation and guiding mechanism arranged between longitudinal flanges on two mutually butted pieces of the tower, wherein the installation and guiding mechanism comprises a first fixing plate, and a second fixing plate, the first fixing plate is arranged on an inner wall surface of one of the pieces of the tower, and the second fixing plate is arranged on an inner wall surface of the other piece of the tower, and the first fixing plate and the second fixing plate are detachably connected through a guide pin and can slide along the guide pin.

The second fixing plate is rotatably connected with a fixing handle, the fixing handle is rotatably connected with a U-shaped ring, the first fixing plate is provided with a clamping groove for receiving the U-shaped ring, and when the U-shaped ring of the handle is clamped in the clamping groove of the first fixing plate, the handle can be rotatably and detachably connected with the first fixing plate.

The first fixing plate and the second fixing plate both are U-shaped fixing plates, two longitudinal edges of the U-shaped fixing plates are vertically fixed on the inner wall surface of the piece of the tower and are fitted to the inner wall surfaces, the guide pins are arranged in inner grooves of the U-shaped fixing plates and are fitted to the inner wall surfaces of the U-shaped fixing plates, and the U-shaped fixing plates, the guide pins, and the handles are provided with butted pin shaft holes.

Further, a sealing strip is arranged between the two mutually butted pieces of the tower, and a sealing surface of the sealing strip is fitted to a connecting surface of the two mutually butted pieces of the tower.

Further, the sealing strip comprises a vertical section, a horizontal section, and an arrow-shaped tail section which are sequentially connected, the vertical section is fitted to the outer wall surfaces of two mutually butted pieces of the tower, the horizontal section is arranged on a joint surface of the two mutually butted pieces of the tower, and the tail section is in contact with the inner wall surfaces of the two mutually butted pieces of the tower.

At least one example of the second object of the present disclosure provides a tower, the tower comprises a tower body formed by abutting a plurality of split tower sections, and each the the split tower section comprises the sealing and waterproof structure of the split tower section described in any one of the above items; further comprising a water collecting system arranged between circumferential flanges on the two adjacent split tower sections, the water collecting system comprises a water collecting tank, a guide strip, and a water collecting pipeline arranged inside the tower; the water collecting tank is arranged at a bottom of a circumferential flanges butt joint gap between the two adjacent split tower sections, the guide strip is arranged on both sides of the circumferential flanges butt joint gap and connected with a top of the water collecting tank, and a bottom of the water collecting tank is communicated with the water collecting pipeline.

The water collecting pipelines of the two adjacent split tower sections are communicated, and the water collecting pipeline of the bottommost split tower section is communicated with a pre-buried drain pipe in the tower body.

Further, the top of the water collecting tank is butted with a lower side of the circumferential flanges butt joint gap between the two adjacent split tower sections through an inclined plate.

Further, the guide strip is fitted and fixed on the circumferential flange and the inner surface of the tower body.

The beneficial effects of the above examples of the present invention are as follows:
(1) According to the present disclosure, the sealing and waterproof structure of the split tower section can meet the manufacturing requirements of the large-diameter split tower and can meet the requirements of rapid positioning and assembly in the split tower assembly process through the installation and guiding structure, to improve the assembly accuracy of the split tower, reduce the cylinder dislocation, and increase the cylinder sealing performance.
(2) According to the present disclosure, providing a water collecting system inside the tower, which can lead the rainwater entering the cylinder through the splicing joints of the split tower out of the tower through the drainage pipeline at the bottom of the tower, to prevent the cylinder and bolts from rusting and the electrical cabinet from failing due to water inflow; meanwhile, by cooperating with the sealing and waterproof structure on the split tower, it can ensure the sealing waterproof performance of the cylinder, effectively prevent the rainwater, sand, winged insects and the like from entering the tower in the later period, and finally solve the problem of sealing waterproof short board of the split tower.

### BRIEF DESCRIPTION OF THE DRAWINGS

The accompanying drawings constituting a part of the present invention are used to provide a further understanding of the present invention. The exemplary examples of the present invention and descriptions thereof are used to explain the present invention and do not constitute an improper limitation of the present invention.
FIG. 1 is a schematic diagram of a split tower with sealing and waterproof structures in an example of the present disclosure;
FIG. 2 is an enlarged view of portion A of FIG. 1;
FIG. 3 is an exploded view of an installation and guiding mechanism in the example of the present disclosure;
FIG. 4 is a schematic diagram of the state 1 in an installation process of the guiding mechanism in the example of the present disclosure;
FIG. 5 is a schematic diagram of the state 2 in the installation process of the guiding mechanism in the example of the present disclosure;
FIG. 6 is a schematic diagram of the state 3 in the installation process of the guiding mechanism in the example of the present disclosure;
FIG. 7 is a schematic diagram of a sealing structure inside the tower in the example of the disclosure;
FIG. 8 is a sectional view of a sealing strip in the example of the present disclosure;
FIG. 9 is a schematic diagram of a water collecting system inside the tower in the example of the present disclosure;
FIG. 10 is a front view of a water collecting tank in the example of the present disclosure;
FIG. 11 is an axonometric view of the water collecting tank in the example of the present disclosure;
FIG. 12 is a structural diagram of a guide strip in the example of the present disclosure;
FIG. 13 is an installation diagram of the water collecting system inside the tower in the example of the disclosure; and
FIG. 14 is an enlarged view of portion B in FIG. 13.
wherein, 100 - split tower section; 200 - installation and guiding mechanism; 210 - first fixing plate; 211 - first fixing plate inner surface; 212 - buckle fixing groove; 213 - first fixing plate fixing pin hole; 220 - second fixing plate; 221 - second fixing plate inner surface; 222 - second fix plate fixing pin hole a; 223 - second fix plate fixing pin hole b; 230 - guide pin; 231 - guide pin fixing pin hole a; 232 - guide pin fixing pin hole b; 233 - guiding surface of guide pin; 240 - buckle; 250a - first fixing pin; 250b - second fixing pin; 250c - third fixing pin; 260 - handle; 261 - handle fixing pin hole I; 262 - handle fixing pin hole II; 263 - mounting hole for buckle; 300 - water collecting system; 310 - water collecting tank; 311 - drainage plate of the water collecting tank; 312 - lateral plate a; 313 - lateral plate b; 314 - lateral plate c; 315 - lateral plate d; 316 - bottom plate; 317 - joint of the water collecting tank; 320 - guide strip; 321 - upper end of the guide strip; 322 - lower end of the guide strip; 330 - water collecting pipeline; 410 - sealing strip; 411 - tail section of the sealing strip; 412 - horizontal section of the sealing strip; 413 - vertical section of the sealing strip; 420 - sealing plug.

To show the position of each part, the spacing or size between each other is exaggerated, and the schematic diagram is only for schematic use.

### DETAILED DESCRIPTION

The present disclosure will now be further described with reference to the accompanying drawings and examples. It should be pointed out that the following detailed descriptions are all illustrative and are intended to provide further descriptions of the present invention. Unless otherwise specified, all technical and scientific terms used in the present invention have the same meanings as those usually understood by a person of ordinary skill in the art to which the present invention belongs.

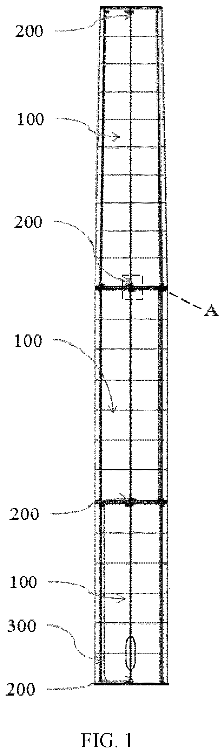

Referring to FIG. 1 showing a tower, comprising multiple split tower sections 100 butted from bottom to top. It should be noted that the split tower section 100 in the present example is composed of two or more split tower pieces, specifically, the cylindrical tower section is formed by butting the longitudinal flanges of the pieces of the split tower with each other, and the longitudinal flanges are located inside the tower. the split tower pieces are connected by guiding mechanisms 200 to form the split tower section 100.

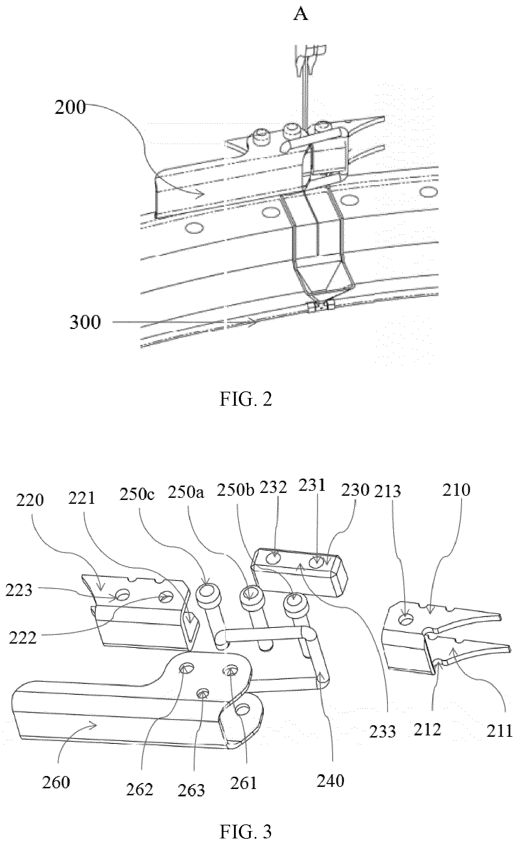

Further, as shown in FIG. 2, all the pieces of the split tower section of the present example are butted through the installation and guiding mechanisms 200 located at both ends inside the tower section, to ensure that the longitudinal flange meets the tolerance requirements after the assembly of the split tower, reduce the cylinder misalignment, and improve the sealing and waterproof performance of the split tower sections.

Specifically, as shown in FIG. 3, the installation and guiding mechanism 200 of the present example mainly comprises a first fixing plate 210, a second fixing plate 220, a guide pin 230, a buckle 240, and a handle 260.

Furthermore, the first fixing plate 210 and the second fixing plate 220 are respectively fixed on the inner wall surfaces of the two mutually butted split tower pieces and are arranged on one side of the butted position; to reduce the welding stress of the end parts of the fixing plates, the end parts of the fixing plates are transited to the wall surface of the tower in a circular arc form, and tail parts of the fixing plates are ground to be transited to the inner wall of the cylinder body smoothly, to improve the fatigue level of the split tower. Wherein, the first fixing plate 210 and the second fixing plate 220 are U-shaped fixing plates, and the U-shaped fixing plates are fixed on the inner wall surface of the split tower piece through two longitudinal side plates, a space formed by the U-shaped fixing plate and the inner wall surface of the split tower piece is used for placing the guide pin 230, and the longitudinal side plate of the first fixing plate 210 and the longitudinal side plate of the second fixing plate 220 are provided with pin shaft holes which are butted with the pin shaft holes on the guide pin 230 to realize the connection between the first fixing plate 210 and the second fixing plate 220.

As shown in FIG. 3, the side plate of the first fixing plate 210 of the present example is provided with a first fixing plate fixing pin hole 213, and a guiding surface 233 of the guide pin 230 abuts against an inner surface 211 of the first fixing plate 210 to realize the nesting of the two. Meanwhile, the first fixing plate 210 further is provided with a buckle fixing groove 212 for clamping the buckle 240.

Further, the side plate of the second fixing plate 220 is provided with a second fixing plate upper fixing pin hole a 222 and a second fixing plate upper fixing pin hole b 223, and an inner surface 221 of the second fixing plate 220 also cooperates with the guiding surface 233 of the guide pin 230 to realize the nesting of the two. Meanwhile, the second fixing plate upper fixing pin hole a 222 is also used for rotating connection with the handle 260. The handle is also a U-shaped fixing plate, and a longitudinal side plate of the handle is provided with three fixing pin holes are distributed in a triangle shape, wherein the outermost fixing pin hole is the buckle mounting hole 263, which is mainly used for rotating connection with the U-shaped buckle 240, so the buckle mounted on the handle can rotate freely; further, the handle fixing pin hole I 261 on the longitudinal side plate of the handle is mainly used to connect with the fixing pin hole a 222 on the second fixing plate 220, and the connection between the two is realized through a first fixing pin 250a.

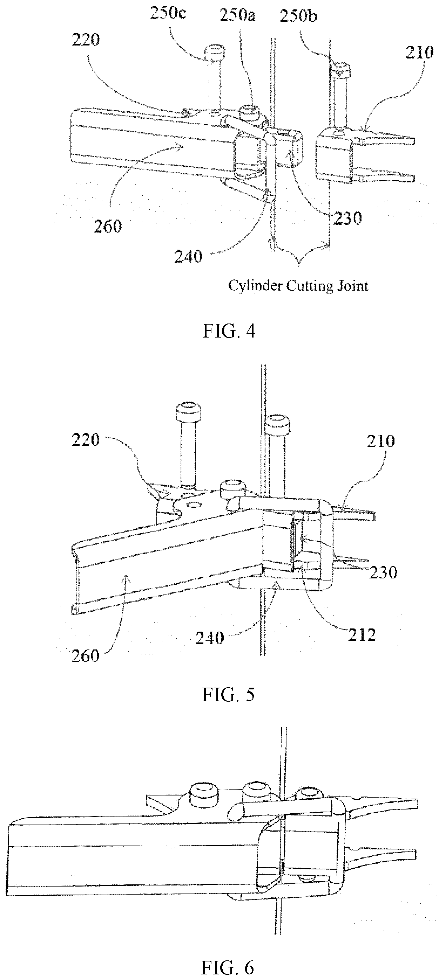

The following is a detailed description of the use process of butting two the split tower pieces together through the installation and guiding mechanism:
Step 1: referring to FIG. 4, before use, connecting the buckle 240 to the handle 260 through the buckle mounting hole 263, and the first fixing pin 250a connects the handle 260, the guiding pin 230, and the second fixing plate 220 together by passing through the handle fixing pin hole I 261, the second fixing plate upper fixing pin hole a 222, and the guide pin fixing pin hole b 232.
Step 2: referring to FIGs. 5 and 6, firstly, the guide pin 230 passes through an interior of the first fixing plate and the guide surface 233 of the guide pin has a certain matching relationship with the inner surface 211 of the first fixing plate; secondly, the buckle 240 is placed in the buckle fixing groove 212 on the first fixing plate, and pulling the handle 260 to make the split tower pieces in a locking state along with the guide pin 230 under the effect of the installation and guiding mechanism; finally, a third fixing pin 250c passes through a handle fixing pin hole II 262 on the handle and the fixing pin hole b 223 on the second fixing plate to lock the handle, and at the same time, a second fixing pin 250b passes through the fixing pin hole 213 on the first fixing plate and the fixing pin hole a 231 on the guide pin to completely lock the installation and guiding mechanism, to play a guiding and pre-tightening role for the assembly of the split tower.

Accordingly, the installation and guiding mechanism can meet the requirement for quick positioning and installation during the assembly of the split tower, can ensure that the tolerance of the longitudinal flange meets the requirement after the assembly of the split tower, and can improve the sealing and waterproof performance of the split tower section 100.

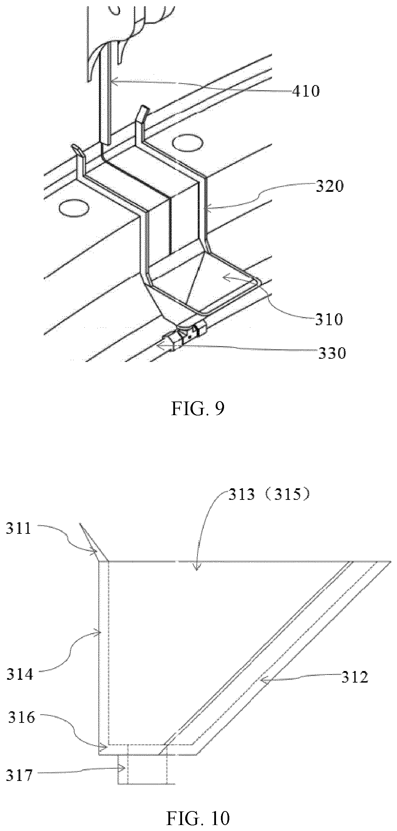

To further enhance the sealing performance after the butt joint of the longitudinal flanges of the split tower, as shown in FIG. 9, in the present example, a sealing plug 420 is provided on the butt joint surface of the longitudinal flanges of the two mutually butted split tower pieces, which is used to eliminate the gap and deformation on the longitudinal flanges of the split tower pieces caused by the production and transportation of the split tower and enhances the sealing after the assembly of the tower. The thickness of the sealing plug can be adjusted according to the gap between the longitudinal flanges of the mutually butted split tower pieces.

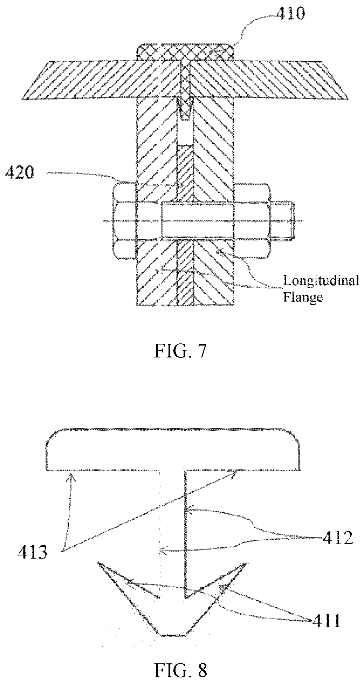

Further, to ensure the sealing performance of the two adjacent split tower sections 100, a sealing strip is provided between the adjacent split tower sections 100 of the tower body, as shown in FIGs. 7 and 8, the sealing strip is a T-shaped piece as a whole, and comprises a horizontal section 412 of the sealing strip and a vertical section 413 of the sealing strip, and the end of the horizontal section 412 of the sealing strip surface is connected with an arrow-shaped tail section 411 of the sealing strip. A usage method of the sealing strip 410 is as follows: arranging the horizontal section 412 of the sealing strip on the joint surface of the mutually butted split tower pieces, and at the same time, fitting the vertical section 413 of the sealing strip to the outer wall of the tower body, and fitting the arrow-shaped tail section 411 of the sealing strip to the inner wall of the tower body, so the sealing system formed in this way can effectively prevent rainwater, sand, winged insects, etc. from entering the tower body in the later period.

In addition, an example of the present disclosure further provides a tower body being formed by butting a plurality of split tower sections 100 from bottom to top, and each the split tower section 100 comprises the sealing system of the split tower section provided by the above examples.

It should be noted that the adjacent split tower sections of the tower body provided in the present example are butted together through the circumferential flanges at the top and the bottom of the split tower section, and when the circumferential flanges of the upper and lower split tower sections are butted together, there will be also a gap, so the external water may enter the tower body through the gap.

To solve the technical problem, refer to FIG. 9, the present example provides a water collecting system 300 below the circumferential flanges butt joint gap inside the split tower, and the water collecting system 300 comprises a water collecting groove 310, a guide strip 320, and a water collecting pipeline 330, wherein the water collecting groove is tightly fitted to the bottom of the circumferential flanges butt joint gap inside the split tower for collecting the water entering the inside of the tower body from the gap; the guide strips are arranged at two sides of the gap, cling to the inner walls of the circumferential flanges and are connected with the top of the water collecting tank 310, and are used for guiding the water entering the inside to the water collecting tank 310, and then leading the water out of the tower body through the water collecting pipeline 330 communicated with the bottom of the water collecting tank.

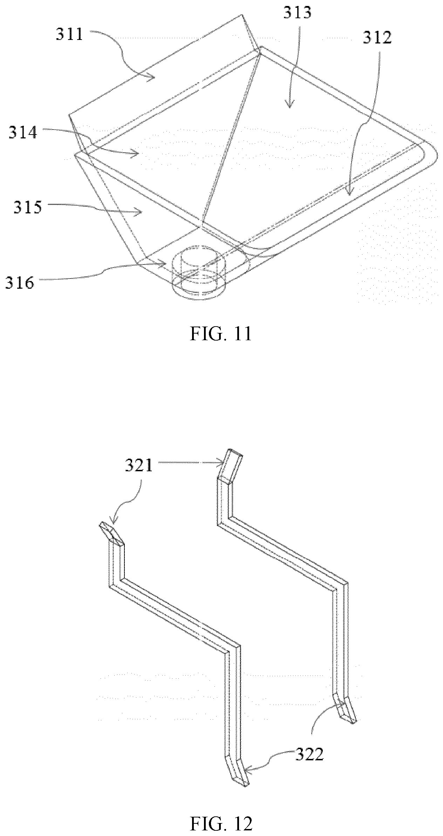

Specifically, as shown in FIGs 10 to 12, the water collecting tank 310 is formed a conical body by a side plate a 312, a side plate b 313, a side plate c 314, a side plate d 315, and a bottom plate 316, wherein the bottom plate is provided with a joint 317 of the water collecting tank for connecting with the water collecting pipeline 330. Further, the top of the water collecting tank 310 is propped against the lower side of the cutting seam of the circumferential flange of the split tower piece through the tip of a drainage plate 311 obliquely arranged facing the inner wall of the circumferential flange, to ensure the rainwater at the butt joint gaps of the split tower pieces flows into the water collecting tank through the drainage plate.

To ensure the water collecting performance of the water collecting tank 310, the guide strip 320 is connected to the installation position of the top of the water collecting tank 310, as shown in FIG. 10, the guide strip 320 in the present example is in a stepped shape, which is mainly used for being fitted and fixed on the circumferential flange and the inner surface of the cylinder. Of course, this is not a limitation to the shape of the guide strip disclosed by the present disclosure, and the shape of the guide strip needs to be adjusted according to the specific shape of the circumferential flange. The guide strip is provided with an upper end 321 and a lower end 322, wherein the upper end 321 is flared to ensure the flow guiding effect, and the lower end 322 is fitted to the two sides of the drainage plate 311 to guide the water into the water collecting tank 310.

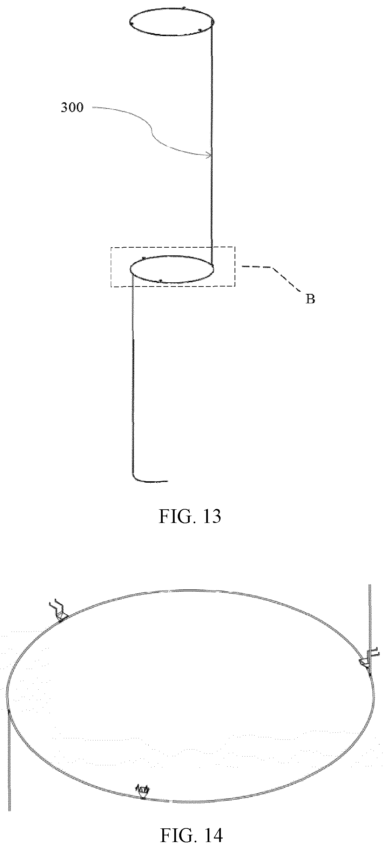

It should be noted that, as shown in FIGs. 13 and 14, inside the tower body, the water collecting pipelines on each of the split tower sections 100 are communicated with each other, and the water collecting pipeline on the bottommost split tower section of the tower is led out of the tower through the drainage pipeline at the bottom of the tower.

Such that, the example of the present disclosure provides a water collecting system inside the tower, which can lead the rainwater entering the cylinder through the butt joints of the split tower out of the inside of the tower through the drainage pipeline at the bottom of the tower, to avoid the corrosion of cylinder and bolts and the failure of electrical cabinet caused by water inflow. At the same time, combined with the sealing and waterproof structure in the split tower, it can ensure the sealing and waterproof performance of the cylinder, and effectively prevent the rainwater, sand, flying insects, etc. entering the inside of the tower in the later period, and finally solve the short board problem of the sealing and waterproof of the split tower.

It should be noted that the foregoing descriptions are merely preferred embodiments of the present invention, but are not intended to limit the present invention.

## Claims

1. A sealing and waterproof structure of split tower section, comprising a sealing strip (410) and an installation and guiding mechanism (200) arranged between longitudinal flanges on two mutually butted split tower pieces in one split tower section (100), wherein the installation and guiding mechanism (200) comprises a first fixing plate (210) and a second fixing plate (220), the first fixing plate (210) is arranged on an inner wall surface of one of the two mutually butted split tower pieces in the split tower section (100), and the second fixing plate (220) is arranged on an inner wall surface of the other one of the two mutually butted split tower pieces in the split tower section (100), and the first fixing plate (210) and the second fixing plate (220) are detachably connected through a guide pin (230) and can slide along the guide pin (230);
**characterized in that**, that
the second fixing plate (220) is rotatably connected with a fixing handle (260), the fixing handle (260) is rotatably connected with a U-shaped ring (240), the first fixing plate (210) is provided with a clamping groove (212) for receiving the U-shaped ring (240), and when the U-shaped ring (240) of the fixing handle (260) is clamped in the clamping groove (212) of the first fixing plate (210), the fixing handle (260) can be rotatably and detachably connected with the first fixing plate (210); and
the first fixing plate (210) and the second fixing plate (220) both are U-shaped fixing plates, two longitudinal edges of the U-shaped fixing plates (210, 220) are vertically fixed on the inner wall surface of the split tower piece and are fitted to the inner wall surfaces, the guide pin is arranged in inner grooves of the U-shaped fixing plates (210, 220) and are fitted to the inner wall surfaces (211, 221) of the U-shaped fixing plates (210, 220), and the U-shaped fixing plates (210, 220), the guide pin (230), and the fixing handle (260) are provided with butted pin shaft holes (213, 222, 223, 231, 232, 261, 262).

2. The sealing and waterproof structure as claimed in claim 1, wherein the sealing strip (410) is arranged between the two mutually butted split tower pieces in the split tower section (100), and a sealing surface of the sealing strip (410) is fitted to a connecting surface of the two mutually butted split tower pieces in the split tower section (100).

3. The sealing and waterproof structure as claimed in claim 2, wherein the sealing strip (410) comprises a vertical section (413), a horizontal section (412), and an arrow-shaped tail section (411) which are sequentially connected, the vertical section (413) is fitted to the outer wall surfaces of two mutually butted split tower pieces in the split tower section (100), the horizontal section (412) is arranged on a joint surface of the two mutually butted split tower pieces in the split tower section (100), and the tail section (411) is in contact with the inner wall surfaces of the two mutually butted split tower pieces in the split tower section (100).

4. A tower, comprising a tower body formed by abutting a plurality of split tower sections, and each the split tower section (100) comprises the sealing and waterproof structure of the split tower section of any of claims 1-3.

5. A tower, comprising a tower body formed by abutting a plurality of split tower sections (100), and each the split tower section (100) comprises the sealing and waterproof structure of the split tower section of any of claims 1-3; further comprising a water collecting system (300) arranged between circumferential flanges on the two adjacent split tower sections (100), the water collecting system (300) comprises a water collecting tank (310), a guide strip (320), and a water collecting pipeline (330) arranged inside the tower; the water collecting tank (310) is arranged at a bottom of a circumferential flanges butt joint gap between the two adjacent split tower sections (100), the guide strip (320) is arranged on both sides of the circumferential flanges butt joint gap and connected with a top of the water collecting tank (310), and a bottom of the water collecting tank (310) is communicated with the water collecting pipeline (330);
wherein,
the water collecting pipelines (330) of the two adjacent split tower sections (100) are communicated, and the water collecting pipeline (330) of the bottommost split tower section (100) is communicated with a pre-buried drain pipe in the tower body.

6. The tower as claimed in claim 5, wherein the top of the water collecting tank (310) is butted with a lower side of the circumferential flanges butt joint gap between the two adjacent split tower sections (100) through an inclined plate (311).

7. The tower as claimed in claim 5, wherein the guide strip (320) is fitted and fixed on the circumferential flange and the inner surface of the tower body.

## Patentansprüche

1. Dichtungs- und Wasserdichtungsstruktur einer geteilten Turmsektion, umfassend einen Dichtungsstreifen (410) und einen Installations- und Führungsmechanismus (200), der zwischen Längsflanschen auf zwei aneinanderstoßenden geteilten Turmstücken in einer geteilten Turmsektion (100) angeordnet ist, wobei der Installations- und Führungsmechanismus (200) eine erste Befestigungsplatte (210) und eine zweite Befestigungsplatte (220) umfasst, wobei die erste Befestigungsplatte (210) auf einer Innenwandfläche eines der beiden aneinanderstoßenden geteilten Turmstücke in der geteilten Turmsektion (100) angeordnet ist und die zweite Befestigungsplatte (220) auf einer Innenwandfläche des anderen der beiden aneinanderstoßenden geteilten Turmstücke in der geteilten Turmsektion (100) angeordnet ist, und wobei die erste Befestigungsplatte (210) und die zweite Befestigungsplatte (220) über einen Führungsstift (230) lösbar miteinander verbunden sind und entlang des Führungsstifts (230) gleiten können,
**dadurch gekennzeichnet, dass**
die zweite Befestigungsplatte (220) drehbar mit einem Befestigungsgriff (260) verbunden ist, wobei der Befestigungsgriff (260) drehbar mit einem U-förmigen Ring (240) verbunden ist, und dass die erste Befestigungsplatte (210) mit einer Klemmnut (212) zur Aufnahme des U-förmigen Rings (240) versehen ist, wobei, wenn der U-förmige Ring (240) des Befestigungsgriffs (260) in der Klemmnut (212) der ersten Befestigungsplatte (210) geklemmt ist, der Befestigungsgriff (260) drehbar und lösbar mit der ersten Befestigungsplatte (210) verbunden werden kann, und
dass die erste Befestigungsplatte (210) und die zweite Befestigungsplatte (220) beide U-förmige Befestigungsplatten sind, wobei zwei Längskanten der U-förmigen Befestigungsplatten (210, 220) vertikal auf der Innenwandfläche des geteilten Turmstücks befestigt und an den Innenwandflächen angebracht sind, wobei der Führungsstift in inneren Nuten der U-förmigen Befestigungsplatten (210, 220) angeordnet und an den Innenwandflächen (211, 221) der U-förmigen Befestigungsplatten (210, 220) angebracht ist, und wobei die U-förmigen Befestigungsplatten (210, 220), der Führungsstift (230) und der Befestigungsgriff (260) mit aneinanderstoßenden Stiftwellenlöchern (213, 222, 223, 231, 232, 261, 262) versehen sind.

2. Dichtungs- und Wasserdichtungsstruktur nach Anspruch 1, wobei der Dichtungsstreifen (410) zwischen den beiden aneinanderstoßenden geteilten Turmstücken in der geteilten Turmsektion (100) angeordnet ist und eine Dichtungsfläche des Dichtungsstreifens (410) an einer Verbindungsfläche der beiden aneinanderstoßenden geteilten Turmstücke in der geteilten Turmsektion (100) angebracht ist.

3. Dichtungs- und Wasserdichtungsstruktur nach Anspruch 2, wobei der Dichtungsstreifen (410) eine vertikale Sektion (413), eine horizontale Sektion (412) und eine pfeilförmige Endsektion (411) umfasst, die nacheinander verbunden sind, wobei die vertikale Sektion (413) an den Außenwandflächen von zwei aneinanderstoßenden geteilten Turmstücken in der geteilten Turmsektion (100) angebracht ist, wobei die horizontale Sektion (412) auf einer Verbindungsfläche der beiden aneinanderstoßenden geteilten Turmstücke in der geteilten Turmsektion (100) angeordnet ist, und wobei die Endsektion (411) mit den Innenwandflächen der beiden aneinanderstoßenden geteilten Turmstücke in der geteilten Turmsektion (100) in Kontakt steht.

4. Turm, umfassend einen Turmkörper, der durch Aneinanderliegen einer Vielzahl von geteilten Turmsektionen gebildet ist, wobei jede geteilte Turmsektion (100) die Dichtungs- und Wasserdichtungsstruktur der geteilten Turmsektion gemäß einem der Ansprüche 1 bis 3 umfasst.

5. Turm, umfassend einen Turmkörper, der durch Aneinanderliegen einer Vielzahl von geteilten Turmsektionen (100) gebildet ist, wobei jede geteilte Turmsektion (100) die Dichtungs- und Wasserdichtungsstruktur der geteilten Turmsektion gemäß einem der Ansprüche 1 bis 3 umfasst, weiterhin umfassend ein Wassersammelsystem (300), das zwischen Umfangsflanschen auf den beiden benachbarten geteilten Turmsektionen (100) angeordnet ist, wobei das Wassersammelsystem (300) einen Wassersammeltank (310), einen Führungsstreifen (320) und eine Wassersammelrohrleitung (330) umfasst, die innerhalb des Turms angeordnet ist, wobei der Wassersammeltank (310) an einer Unterseite einer Stoßfuge einer Umfangsflansche zwischen den beiden benachbarten geteilten Turmsektionen (100) angeordnet ist, wobei der Führungsstreifen (320) auf beiden Seiten der Stoßfuge der Umfangsflansche angeordnet und mit einer Oberseite des Wassersammeltanks (310) verbunden ist, und wobei eine Unterseite des Wassersammeltanks (310) mit der Wassersammelrohrleitung (330) kommuniziert,
wobei,
die Wassersammelrohrleitungen (330) der beiden benachbarten geteilten Turmsektionen (100) miteinander kommunizieren und die Wassersammelrohrleitung (330) der untersten geteilten Turmsektion (100) mit einer vorab verlegten Abflussrohrleitung im Turmkörper kommuniziert.

6. Turm nach Anspruch 5, wobei die Oberseite des Wassersammeltanks (310) über eine geneigte Platte (311) an die niedrige Seite der Stoßfuge der Umfangsflansche zwischen den beiden benachbarten geteilten Turmsektionen (100) stoßt.

7. Turm nach Anspruch 5, wobei der Führungsstreifen (320) auf dem Umfangsflansch und der Innenfläche des Turmkörpers angebracht und befestigt ist.

## Revendications

1. Structure d'étanchéité et d'imperméabilisation d'une section de tour divisée, comprenant une bande d'étanchéité (410) et un mécanisme d'installation et de guidage (200) disposé entre des brides longitudinales sur deux pièces de tour divisées en butée l'une contre l'autre dans une section de tour divisée (100), dans laquelle le mécanisme d'installation et de guidage (200) comprend une première plaque de fixation (210) et une seconde plaque de fixation (220), la première plaque de fixation (210) est disposée sur une surface de paroi interne de l'une des deux pièces de tour divisées en butée l'une contre l'autre dans la section de tour divisée (100), et la seconde plaque de fixation (220) est disposée sur une surface de paroi interne de l'autre des deux pièces de tour divisées en butée l'une contre l'autre dans la section de tour divisée (100), et la première plaque de fixation (210) et la seconde plaque de fixation (220) sont reliées de manière amovible par une goupille de guidage (230) et peuvent coulisser le long de la goupille de guidage (230) ;
**caractérisée en ce que**,
la seconde plaque de fixation (220) est reliée de manière rotative à une poignée de fixation (260), la poignée de fixation (260) est reliée de manière rotative à un anneau en forme de U (240), la première plaque de fixation (210) est pourvue d'une rainure de serrage (212) destinée à recevoir l'anneau en forme de U (240), et lorsque l'anneau en forme de U (240) de la poignée de fixation (260) est serré dans la rainure de serrage (212) de la première plaque de fixation (210), la poignée de fixation (260) peut être reliée de manière rotative et amovible à la première plaque de fixation (210) ; et
la première plaque de fixation (210) et la seconde plaque de fixation (220) sont toutes deux des plaques de fixation en forme de U, deux bords longitudinaux des plaques de fixation en forme de U (210, 220) sont fixés verticalement sur la surface de paroi interne de la pièce de tour divisée et sont ajustés aux surfaces de paroi internes, la goupille de guidage est disposée dans des rainures internes des plaques de fixation en forme de U (210, 220) et sont ajustées aux surfaces de paroi internes (211, 221) des plaques de fixation en forme de U (210, 220), et les plaques de fixation en forme de U (210, 220), la goupille de guidage (230) et la poignée de fixation (260) sont pourvues de trous d'arbre de goupille (213, 222, 223, 231, 232, 261, 262) en butée.

2. Structure d'étanchéité et d'imperméabilisation selon la revendication 1, dans laquelle la bande d'étanchéité (410) est disposée entre les deux pièces de tour divisées en butée l'une contre l'autre dans la section de tour divisée (100), et une surface d'étanchéité de la bande d'étanchéité (410) est ajustée à une surface de liaison des deux pièces de tour divisées en butée l'une contre l'autre dans la section de tour divisée (100).

3. Structure d'étanchéité et d'imperméabilisation selon la revendication 2, dans laquelle la bande d'étanchéité (410) comprend une section verticale (413), une section horizontale (412) et une section arrière (411) en forme de flèche qui sont reliées séquentiellement, la section verticale (413) est ajustée aux surfaces de paroi externes de deux pièces de tour divisées en butée l'une contre l'autre dans la section de tour divisée (100), la section horizontale (412) est disposée sur une surface de jonction des deux pièces de tour divisées en butée l'une contre l'autre dans la section de tour divisée (100), et la section arrière (411) est en contact avec les surfaces de paroi internes des deux pièces de tour divisées en butée l'une contre l'autre dans la section de tour divisée (100).

4. Tour, comprenant un corps de tour formé par mise en butée contre une pluralité de sections de tour divisées, et chaque section de tour divisée (100) comprenant la structure d'étanchéité et d'imperméabilisation de la section de tour divisée selon l'une quelconque des revendications 1 à 3.

5. Tour, comprenant un corps de tour formé par mise en butée contre une pluralité de sections de tour divisées (100), et chaque section de tour divisée (100) comprenant la structure d'étanchéité et d'imperméabilisation de la section de tour divisée selon l'une quelconque des revendications 1 à 3 ; comprenant en outre un système de collecte d'eau (300) disposé entre des brides circonférentielles sur les deux sections de tour divisées (100) adjacentes, le système de collecte d'eau (300) comprend un réservoir de collecte d'eau (310), une bande de guidage (320) et une conduite de collecte d'eau (330) disposés à l'intérieur de la tour ; le réservoir de collecte d'eau (310) est disposé au niveau d'une partie inférieure d'un espace de joint bout à bout de brides circonférentielles entre les deux sections de tour divisées (100) adjacentes, la bande de guidage (320) est disposée sur deux côtés de l'espace de joint bout à bout de brides circonférentielles et reliée à une partie supérieure du réservoir de collecte d'eau (310), et une partie inférieure du réservoir de collecte d'eau (310) est en communication avec la conduite de collecte d'eau (330) ;
dans laquelle,
les conduites de collecte d'eau (330) des deux sections de tour divisées (100) adjacentes sont en communication, et la conduite de collecte d'eau (330) de la section de tour divisée (100) la plus basse est en communication avec une conduite d'évacuation pré-enterré dans le corps de tour.

6. Tour selon la revendication 5, dans laquelle la partie supérieure du réservoir de collecte d'eau (310) vient en butée contre un côté inférieur de l'espace de joint bout à bout de brides circonférentielles entre les deux sections de tour divisées (100) adjacentes par l'intermédiaire d'une plaque inclinée (311).

7. Tour selon la revendication 5, dans laquelle la bande de guidage (320) est ajustée et fixée sur la bride circonférentielle et la surface interne du corps de tour.
